# EUROPEAN PATENT APPLICATION

(11) **EP 4 831 911 A1**
(43) Date of publication of application: **28.10.2026**
(21) Application number: 26174590.5
(22) Date of filing: 24.04.2026
(51) Int. Cl.: G06T 5/77, G06T 5/60

(54) **IMAGE DECIMATION AND RECONSTRUCTION TECHNIQUES**

(30) Priority: 24.04.2025 GB 202506080
(71) Applicant: Sony Interactive Entertainment Europe Limited, London W1F 7LP (GB)
(72) Inventor: BIGOS, Andrew James, London, W1F 7LP (GB); SANDERS, Matthew William, London, W1F 7LP (GB)
(74) Representative: Fish & Richardson P.C.

(57) **Abstract**

A computer-implemented method for reducing data content in an image, the method comprising receiving an image at a first data model, removing a plurality of image portions from the image, using a machine learning inference process implemented by the first data model, to thereby insert a plurality of holes in the image and inserting, using the machine learning inference process implemented, at least one anchor element into one or more of the plurality of holes, wherein each anchor element is representative of detail within the respective image portion. The reverse image reconstruction method is also provided.

## Description

### TECHNICAL FIELD

The present specification relates to computer-implemented processes and systems for decimation and reconstruction of an image using inpainting. In particular, the present specification relates to improved machine learning inference processes for decimation and reconstruction of an image using inpainting.

### BACKGROUND

Inpainting or repainting is the process in which missing or deteriorated areas, in an image are filled to recreate the complete image. Thus, the missing or deteriorated image content is synthesised by predicating the correct content for the missing portions of the image, to attempt to create a visually realistic complete image.

Digital images can contain regions of missing or corrupted image data. Missing or corrupted regions of an image are referred to in the art as "holes". A variety of different techniques exist for filling holes in images. Machine learning inference techniques, which rely on trained processes implemented by data models, can predict the missing image content and fill holes in images with high-quality results.

It is also known to exploit inpainting techniques to reduce the amount of image data that needs to be transmitted via a data channel. Thus, holes can be deliberately created in an image by a sender device, such that the holes are filled in by the receiver device using inpainting. However, this can result in a loss of image quality or fidelity in the reconstructed image, particularly if large holes are created in the sent image.

### SUMMARY

Aspects of the present disclosure are set out in the accompanying independent and dependent claims. Combinations of features from the dependent claims may be combined with features of the independent claims as appropriate and not merely as explicitly set out in the claims.

According to an aspect of the present disclosure, there is provided a computer-implemented method for reducing data content in an image, the method comprising receiving an image at a first data model, removing a plurality of image portions from the image, using a machine learning inference process implemented by the first data model, to thereby insert a plurality of holes in the image, and inserting, using the machine learning inference process implemented by the first data model, at least one anchor element into one or more of the holes, wherein each anchor element is representative of detail within the respective image portion.

The present disclosure therefore provides a computer-implemented method for reducing data content in an image, wherein a first data model determines the portions of the image to be removed. Thus, the first data model determines where to create the holes in the image. In the prior art, the area to be removed or in-painted is a well-defined input to the inpaint system (i.e. the data model), whereas in the present disclosure the input to the first data model is a complete image and the first data model attempts to identify the areas that could be accurately reconstructed (e.g. with a given quality threshold).

In addition, in the present disclosure, at least one anchor element is inserted into at least one of the holes, wherein the anchor element is representative of detail within the respective hole. This can reduce the risk of "neural hallucination" or "hallucination" by the data model carrying out the inpainting, as the anchor elements provide additional guidance that can prevent (or minimise) the inpainting process from inserting erroneous details that are not consistent with the original image. Thus, in the present disclosure large areas of the image can be removed, thereby further reducing the amount of data required to transmit the image over a communication channel, whilst also improving the quality and fidelity of the reconstructed image at the client side.

It will be appreciated that the images referred to in the present disclosure are digital images.

It will also be appreciated that the step of receiving the image at the first data model may equivalently be referred to as providing the image to the first data model. The image is provided as an input to the first data model.

Optionally, a plurality of anchor elements are inserted into the modified image. Optionally, one or more anchor elements are inserted into two or more of the plurality of holes.

Optionally, each anchor element comprises one or more pixels. The one or more pixels may be selected as representative of detail(s) within the image portion.

Each anchor element may have a given location with the modified image (i.e. a given position within the hole). Each anchor element may correspond to one of more pixels from the image portion at the given position in the input image. Thus, one or more pixels that have been removed from the image to create the hole may be reinserted as anchor elements within the hole.

Optionally, each of the plurality of holes (or image portions) has a respective area. In some embodiments, an anchor element may only be inserted into holes (or image portions) that exceed a given area. Thus, smaller holes may not comprise an anchor element.

Optionally, inserting at least one anchor element into one or more of the plurality of holes comprises inserting at least one anchor element into each hole having an area that exceeds a predetermined threshold.

Optionally, there is a predetermined ratio of number of anchor elements (n, where n is an integer) to area of a hole (a). Thus, the ratio n:a may be set, for example by the first data model to ensure sufficient anchor elements are provided to mitigate neural hallucination during inpainting. Thus, inserting at least one anchor element into one or more of the plurality of holes comprises inserting a number *n* anchor elements into the plurality of holes as defined by the predetermined ratio n:a.

The method may further comprise receiving, at the first data model, an indication of required image quality. It will be appreciated that the indication of required image quality is an indication of the required image quality following the decimation and inpainting process.

The method may further comprise receiving, at the first data model, a desired compression level.

The method may further comprise, using the machine learning inference process, determining at least one of the number, location and area of each holes to be inserted into the image. Optionally, this determination is at least partially based on the indication of required image quality.

The method may further comprise, using the machine learning inference process, determining at least one of the number of anchor elements to be inserted into the plurality of holes and the location of each anchor element. Optionally, this determination is at least partially based on the indication of required image quality and/or the desired compression level.

The method may further comprise, receiving, at the first data model, a grid of anchor points associated with the image.

Optionally, inserting at least one anchor element into one or more of the plurality of holes may comprises determining, using the machine learning inference process, whether each anchor point in the grid of anchor points is required or not and, for each required anchor point, inserting a corresponding anchor element into the image, wherein the anchor element comprises one or more pixels located at the anchor point in the image.

Optionally, the step of determining, using the machine learning inference process, whether each anchor point in the grid of anchor points is required or not may be at least partially based on the first data model identifying the location of details in the image.

Optionally, the step of determining, using the machine learning inference process, whether each anchor point in the grid of anchor points is required or not may be based on the indication of required image quality received at the first data model and/or the desired compression level.

Optionally, removing a plurality of image portions from the image comprises generating, using the machine learning inference process, a mask and applying the mask to the image.

The step of applying the mask to the image may comprise multiplying the image by the mask. The step of applying the mask to the image may comprise overlaying the mask on the image.

The mask may be a binary mask.

The method may further comprise receiving, at the first data model, an importance map associated with the image. The importance map may equivalently be referred to as a saliency map or a priority map.

Optionally, the importance map is used as an input in the machine learning inference process, such that the mask is generated at least partially based on the importance map.

Optionally, the importance map allocates an importance value to each pixel in the image.

Optionally, the importance map provides information indicating the relative importance of different portions of the image. Based on the importance map, the first data model may allocate an importance value to each pixel in the image.

In some embodiments, each importance value may be a number between 0 and 1, where 0 is the lowest importance and 1 is the highest importance. Pixels of the higher importance value should usually be retained in the modified image to retain image quality and/or fidelity following the inpainting process. Pixels of lower importance value may be removed to create the plurality of holes.

Optionally, to generate the mask, the machine learning inference process applies a threshold to the importance map.

The threshold may be determined (or selected) based on the received indication of required image quality.

Optionally, each importance value in the importance map below the threshold may be set to zero, and each importance value above the threshold may be set to one. Thus, the thresholded importance map becomes a binary mask.

When the binary mask is applied to the image, each pixel in the image that corresponds to a 0 in the binary mask is removed and each pixel in the image that corresponds to a 1 in the binary mask is maintained. Equivalently, each pixel value having an importance value of 0 is removed, and each pixel value in the image having an importance value of 1 is maintained.

Optionally, the step of determining, using the machine learning inference process, whether each anchor point in the grid of anchor points is required or not may be based at least partially based on the binary mask output, or a comparison of the binary mask to the image.

Optionally, the first data model comprises an artificial neural network, ANN.

Optionally, the ANN is a convolutional neural network, CNN.

The first data model may be referred to as a decimation network or a decimation data model.

The modified or decimated image (comprising the plurality of holes and anchor points) may be provided to a codec for encoding.

The encoded modified image may then be transmitted over a communication channel to a client device.

According to a second aspect, there is provided a computer-implemented method for reconstructing an image, the method comprising receiving, at a second data model, a modified image comprising a plurality of holes, wherein one or more of the holes comprise at least one anchor element, applying at least one filling process to fill the plurality of holes, wherein the at least one filling process comprises using a machine learning inference process implemented by the second data model which utilises each anchor element to infer detail within the holes.

This may also be referred to as a method for completing an image.

Utilising each anchor element to infer detail within the holes reduces hallucination of detail within the holes by the second data model. Thus, the anchor elements provide guidance to the machine learning inference process which improves the fidelity and quality of the final (i.e. refilled or reconstructed) image.

It will be appreciated that the second aspect of the present disclosure essentially reverses the method of the first aspect of the disclosure. Thus, the first aspect of the disclosure is carried out at the sender end, and the second aspect of the disclosure is carried out at the receiver or client end. Equivalently, the first aspect of the disclosure can be considered to be a decimation method and the second aspect of the disclosure can be considered to be the corresponding reconstruction method.

An encoded modified image may be received at a client device via a communication channel. The encoded modified image may be decoded by a codec before being provided to the second data model.

Optionally, the second data model comprises an artificial neural network, ANN.

Optionally, the ANN is a convolutional neural network, CNN.

The second data model can be referred to as a reconstruction network or a reconstruction data model.

According to a third aspect, there is provided a computing device comprising one or more processors that are associated with a memory, the one or more processors configured with executable instructions which, when executed, cause the computing device to carry out the computer-implemented method of any embodiment of the first or second aspects of the present disclosure.

Optionally, the computing device is an extended reality device.

Optionally, the extended reality device may be a virtual reality display device, or a mixed reality display device.

According to a fourth aspect, there is provided a computing system comprising: a first computing device comprising the first data model and one or more processors that are associated with a memory, the one or more processors configured with executable instructions which, when executed, cause the first computing device to carry out the computer-implemented method of any embodiment of the first aspect of the disclosure; and a second computing device comprising the second data model and one or more processors that are associated with a memory, the one or more processors configured with executable instructions which, when executed, cause the first computing device to carry out the computer-implemented method of any embodiment of the second aspect of the disclosure.

Optionally, the first data model and the second data model are trained together using shared training data. Thus, the first data model and the second data model may be trained to learn 'together' how to best maximise the final image quality and fidelity while minimizing the used bandwidth in transmitting the image over a communication channel.

### BRIEF DESCRIPTION OF THE DRAWINGS

Embodiments of this disclosure will be described hereinafter, by way of example only, with reference to the accompanying drawings in which like reference signs relate to like elements and in which:
**Figure 1** is a flowchart of a method of reducing data content in an image according to an embodiment of this disclosure;
**Figure 2** is a flowchart of another method of reducing data content in an image according to another embodiment of this disclosure;
**Figure 3** is a diagram representing the inputs to a first data model according to an embodiment of this disclosure;
**Figure 4a** is a diagram representing an example of an importance map;
**Figure 4b** is a diagram representing the importance map of Figure 4a after a threshold has been applied to generate a binary mask according to an embodiment of this disclosure;
**Figure 5** is a diagram representing an importance map according to another embodiment of this disclosure;
**Figure 6** is a flow chart of a method for reconstructing an image according to an embodiment of this disclosure;
**Figure 7** is a box diagram representing a training loop for a first data model and a second data model according to an embodiment of this disclosure; and
**Figure 8** is a block diagram of one example implementation of a computing device.

### DETAILED DESCRIPTION

Embodiments of this disclosure are described in the following with reference to the accompanying drawings.

The following detailed description is merely illustrative in nature and is not intended to limit the embodiments of the subject matter or the application and uses of such embodiments. As used herein, the words "exemplary" and "example" mean "serving as an example, instance, or illustration." Any implementation described herein as exemplary, or an example, is not necessarily to be construed as preferred or advantageous over other implementations. Furthermore, there is no intention to be bound by any expressed or implied theory presented in the preceding technical field, background, or the following detailed description.

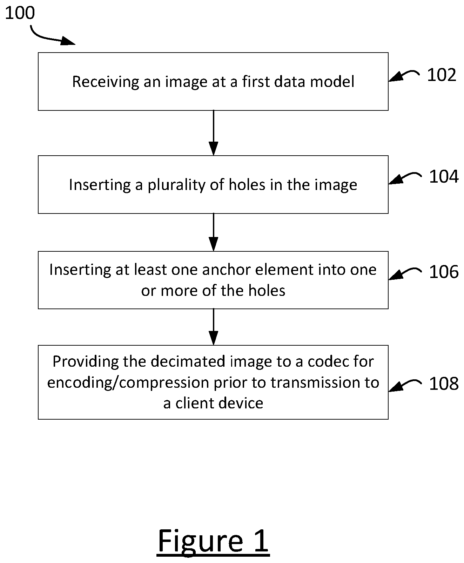

Figure 1 is a flow chart illustrating a method 100 for reducing data content in an image, according to an embodiment of the present disclosure. This may be referred to as a decimation method.

It will be appreciated that there are a variety of different applications wherein a digital image is transmitted from a first computing device to a second computing device over a communication channel. The method 100 provides the technical advantages of reducing the amount of data contained in the image being transferred, thereby improving efficiency and reducing delays at the second computing device. In one example, the method 100 may be used in a video game streaming system, such as a cloud computing system, to reduce the used bandwidth of the image (or video) stream to reduce latency at the client device.

The method 100 may be implemented by a processing resource. The processing resource may comprise, or be in communication with, a first data model.

At step 102, the method comprises receiving an image at a first data model. The image may be a frame of a video. The image may be referred to as an input image, as the image is used as an input to the first data model.

The data model may comprise an artificial neural network (ANN). In some embodiments, the ANN may comprise a convolutional neural network (CNN).

ANNs (including CNNs) are computational models inspired by biological neural networks and are used to approximate functions that are generally unknown. ANNs can be hardware-based (neurons are represented by physical components) or software-based (computer models) and can use a variety of topologies and learning algorithms. ANNs can be configured to approximate and derive functions without a prior knowledge of a task that is to be performed and instead, they evolve their own set of relevant characteristics from learning material that they process. A convolutional neural network (CNN) employs the mathematical operation of convolution in at least one of their layers and are widely used for image mapping and classification applications.

In some examples, ANNs can have three layers that are interconnected. The first layer usually consists of input neurons. These input neurons send data on to the second layer, referred to a hidden layer which implements a function and which in turn sends output neurons to the third layer. With respect to the number of neurons in the input layer, this may be based on training data or reference data relating to traits of an avatar provided to train the ANN for detecting similar traits and modifying the avatar accordingly.

The second or hidden layer in a neural network implements one or more functions. There may be a plurality of hidden layers in the ANN. For example, the function or functions may each compute a linear transformation of the previous layer or compute logical functions. For instance, considering that an input vector can be represented as x, the hidden layer functions as h and the output as y, then the ANN may be understood as implementing a function of using the second or hidden layer that maps from x to h and another function g that maps from h to y. So, the hidden layer's activation is f(x) and the output of the network is g(f(x)).

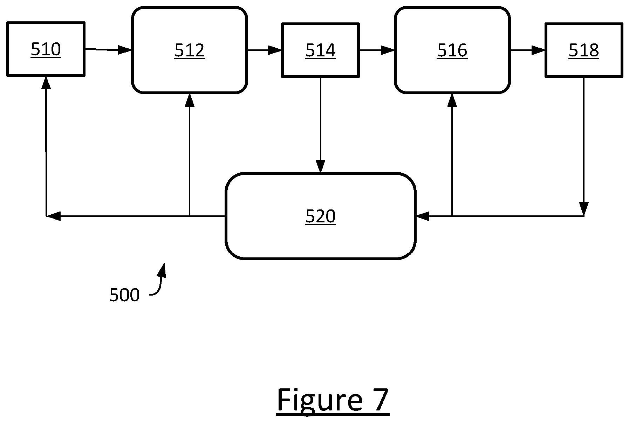

The training of the first data model is described in detail in connection with Figure 7.

At step 104, the method comprises inserting, by the first data model using a machine learning inference process, a plurality of holes in the image. Thus, a plurality of portions or regions of the image are removed, deleted or erased to create said holes or gaps in the image to create a modified image. Step 104 is carried out by the first data model using a machine learning inference process.

At step 106, the method comprises inserting, by the first data model using a machine learning inference process, at least one anchor element into one or more of the plurality of holes in the modified image. In some embodiments, more than one anchor element may be inserted into a single hole, whereas some holes may contain no anchor elements.

Each anchor element is representative of detail within the respective image portion that was removed to create the hole. Each anchor element may comprise one or more pixels (e.g. a single pixel, or a group of two or more adjacent pixels). Thus, one or more pixels that have been removed from the image to create a hole may be reinserted as one or more anchor elements within that hole.

The provision of one or more anchor elements within the plurality of holes can provide the technical advantage of reducing the likelihood of "neural hallucination" or "hallucination by a second data model that reverses the method 100 to reconstruct the input image (see Figure 7). This allows the first data model to remove larger portions of the image (i.e. insert larger holes), further reducing the amount of data in the image, while maintaining the quality and fidelity of the reconstructed image at the client side.

The modified image including the plurality of holes and anchor elements may be referred to as a decimated image in the present disclosure. The method 100 may finish after step 106. Optionally, the method may further comprise step 108 of providing the decimated image to a codec. The codec may encode (or compress) the decimated image prior to transmission to a client device. It will be appreciated that a variety of such encoding or compression techniques are known in the art.

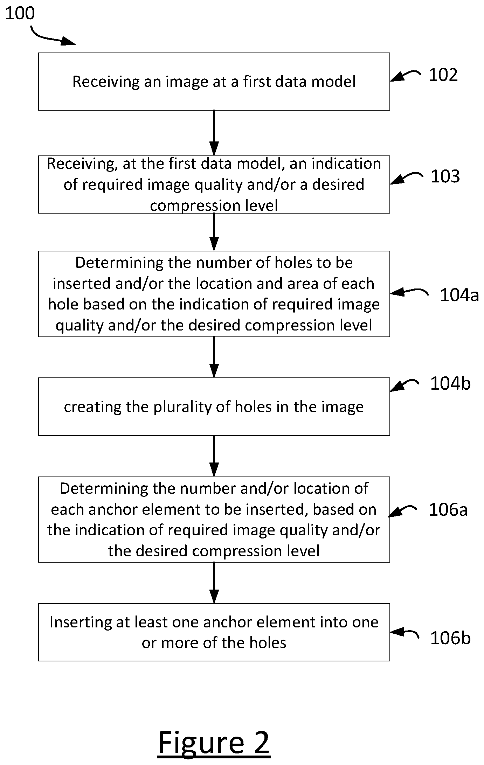

Figure 2 shows an embodiment of the method 100 for reducing data content in an image in more detail.

As shown in Figure 2, the method 100 may further comprise the step 103 of receiving, at the first data model, an indication of required image quality and/or a desired compression level for the output image. The indication of required image quality and/or the desired compression level may be received together with the image (in step 102), or separately. It will be appreciated that the indication of required image quality informs the first data model what level of quality is expected of the final image following the decimation and subsequent reconstruction process. This indication may be a numerical indication, or it may be simply a general indication of a quality level, such as high, medium or low quality, or a quality level from 1-10. Similarly, the desired compression level informs the first data model how much data must be removed from the image during the decimation process (e.g. a minimum amount of data that must be removed). Again, this compression level may be a numerical indication (e.g. a target data amount) or it may be simply a general indication of a compression level, such as high, medium or low compression, or a compression level from 1-10.

In Figure 2, step 104 of inserting the plurality of holes in the image has been divided into two stages. At a first stage 104a, the first data model comprises determining the number of holes to be inserted and/or the location and area of each hole. This determination is carried out by the first data model using the machine learning inference process. In this embodiment, this determination is based at least partially on the received indication of required image quality and/or desired compression level in step 103. In general terms, if a lower quality final image is required, then the first data model may insert a higher number of holes, or the plurality of holes may cover a larger area of the image. Similarly, if a higher compression degree is desired (e.g. a lower amount of data in the final image), then the first data model may insert a higher number of holes, or the plurality of holes may cover a larger area of the image.

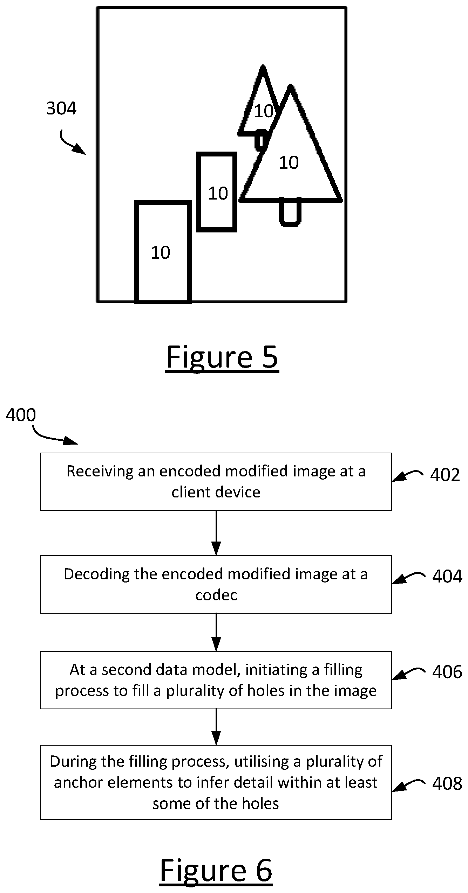

Thus, in the present disclosure the first data model may determine where the holes are to be inserted into the image, based on the machine learning inference process developed during training of the data model. In comparison, in the prior art, most in-painting applications have a predetermined area to be in-painted, such that the area to be removed from the image is a well-defined input to the system (i.e. the data model). In the present disclosure, the input to the first data model is a complete image and the first data model attempts to identify the areas of the image that could removed and accurately reconstructed with a given quality threshold (i.e. to satisfy the indication of required image quality) (see Figure 6).

At a second stage 104b, the image portions corresponding to each hole determined in step 104a are removed from the image, thereby inserting or creating the plurality of holes in the image.

Similarly, step 106 of inserting the anchor element(s) into one or more of the plurality of holes is also divided into two stages. In a first stage 106a, the first data model comprises determining the number of anchor elements to be inserted and/or the location of each anchor element. This determination is carried out by the first data model using the machine learning inference process. In this embodiment, this determination is based at least partially on the received indication of required image quality and/or desired compression level in step 103. In general terms, if a lower quality final image is required, then the first data model may insert fewer anchor elements. If a higher compression level is required, then more data will be removed from the image, which may require the provision of more anchor elements to ensure that the correct detail is retained in the final image.

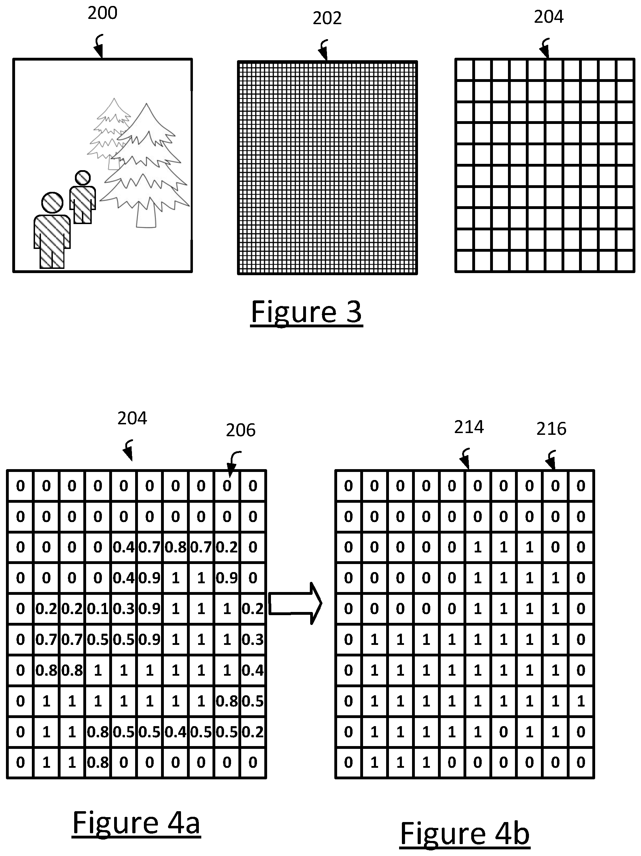

An embodiment of the process of determining the holes and anchor elements to be inserted into the image is described in more detail in connection with Figures 3 to 5.

Figure 3 illustrates the inputs to the first data model according to an embodiment of this disclosure. In this embodiment, the inputs comprise an image 200 (see step 102 of the method), a grid of anchor points 202, and an importance map 204. The indication of required image quality is not shown in Figure 3, but may be provided together with the image 200. It will be appreciated that the image 200, the grid of anchor points 202 and the importance map 204 are not shown to scale. The image 200 is just an example of a possible image, comprising a plurality of pixels, each pixel having a numerical pixel value representing the colour of said pixel in the image 200.

The grid of anchor points 202 may be stored at the first data model and used in the decimation process for all images, rather than a new grid of anchor points 202 being received for each image 200 to be processed. The grid of anchor points 202 is a regular M x N grid (or array) of points (or elements). If the grid of anchor points 202 was overlaid on the image, each anchor point would correspond to a given pixel or group of adjacent pixels in the image 200. By analysing the image 200, the importance map 204 and any received indication or required image quality, the first data model determines using the machine learning inference process which of the plurality of anchor points in the grid 202 are required, and which are not required. As explained in connection with Figure 7, during a training process the first data model learns which of these anchor points are needed and which are not needed to aid the final reconstruction of the image. Thus, the first data model effectively learns a binary on/off value for each anchor point.

The importance map 204 provides an indication of the relative importance of different regions of the image 200. Thus, a new importance map 204 is received for each image 200. The importance map 204 is received at the first data model together with the image 200 or the indication of required image quality, or separately. The importance map 204 may provide or indicate an importance value (i.e. a relative importance value) for each pixel in the image 200.

A region of low importance in an image can most likely be removed from the image without affecting the quality of fidelity of the reconstructed image at the client device. Often, a region of low importance in an image contains little detail, for example forming part of a larger background area (such as sky or ground), and/or is at a less prominent location in the image (e.g. at the edge of the image). A region of higher importance should be preferentially retained (at least partially) in the image. A region of high importance in an image likely comprises more intricate detail, or is at a more central/prominent location in the image.

An example of an importance map 204 for the image 200 is shown in more detail in Figure 4a. In Figure 4a, the importance map 204 comprises a plurality of squares 206. Each of these squares 206 corresponds to a region of the image 200. Thus, each square 206 may correspond to one or more pixels in the image 200. Each square 206 has an allocated importance value, which in this example is a number between 0 (lowest importance) and 1 (highest importance). In other examples, the importance value may vary between a lower limit x and an upper limit y, where x and y are any real numbers (such as 0 and 10, or -5 and 5, etc.). By comparing the importance map 204 to the image 200 it is clear that the regions of higher importance in the map 204 correspond to the areas where the detail is located in the image 200. For example, where the people and the trees are located in the image 200, the corresponding squares 206 in the importance map 204 have a higher importance value compared to the squares 206 corresponding to the background of the image 200.

In some embodiments, to determine which regions of the image 200 can be removed, the first data model applies a threshold to the importance map 204. The threshold has a value between the upper and lower limits of the importance values in the map. In the example in Figure 4a, the threshold therefore has a value between 0 and 1. The first data model may select the threshold value at least partially based on the indication of required image quality received. If a higher image quality is required, the threshold value may be nearer to the upper limit of the importance values (e.g. 1). Other factors that the first data model can take into account when selecting the threshold value can include, but is not limited to, the size of the image, the bandwidth of the communication channel used to transmit the final image, the resolution of the image, etc.

Figure 4b shows an example of the importance map 204 in Figure 4a after a threshold has been applied to the importance values contained therein. In this example, the threshold value is 0.4. Accordingly, after the threshold has been applied as shown in Figure 4b, each importance value in the importance map 204 that is lower than or equal to the threshold (0.4) is set to 0, and each importance value in the importance map 204 that is higher than the threshold (0.4) is set to 1. In other embodiments, an importance value that is equal to the threshold value may be set to 1 rather than 0. This generates a binary mask 214, where each square 216 has a value of either 0 or 1 (this may also be called a thresholded importance map 214).

The binary mask 214 is then applied to the image 200 to insert the plurality of holes in the image. To apply the binary mask 214 to the image 200, the image 200 is multiplied by the binary mask 214 (or equivalently, the binary mask 214 is overlaid on the image 200. Thus, the pixel value of any pixels in the image 200 that correspond to (or overlap) a square 216 having a value of 0, are set to 0, thereby creating a hole in the image. The pixel value of any pixels in the image 200 that correspond to (or overlap) a square 216 having a value of 1 are retained in the image (with the pixel value being unchanged). Thus, the lower the threshold value is the more squares 206 are set to 0 in the binary mask, and a larger number of holes or a larger area of holes are inserted into the image.

After the holes have been created in the image following the application of the binary mask 216, the first data model inserts into the modified image the anchor points that have been determined to be required from the grid of anchor points 202 (as explained above).

In some embodiments, the importance map may not be divided into a grid or squares. Instead, the importance map may provide a more general indication of the relative importance of different regions in the input image. A further embodiment of such an importance map is shown in Figure 5. In this embodiment, the importance map 304 indicates the regions having the highest importance value (10). The first data model can process the importance map 304 and infer an importance value for each pixel in the image 200, based on the information in the importance map 304.

The modified image comprising the plurality of holes and anchor points is then transmitted to a client device via a communication channel.

Figure 6 is an embodiment of a method 400 for reconstructing or in-painting an image. The method 400 may be implemented by a processing resource. The processing resource may comprise, or be in communication with, a second data model.

The second data model may comprise an artificial neural network (ANN). In some embodiments, the ANN may comprise a convolutional neural network (CNN), as described above in connection with the first data model.

At step 402 the modified image is received at the client device, comprising the plurality of holes and anchor elements. This modified image may be encoded (or compressed) by a codec prior to transmission to the client device. Thus, optionally, at step 404 the modified image received is decoded at a codec before being transmitted to the second data model. At step 406, the second data model initiates a machine learning inference process to fill the holes in the image, thereby reconstructing the missing portions of the image that were removed to reduce the amount of data in the image.

At step 408, the filling process comprises utilizing the anchor elements within the holes to infer detail within at least some of the holes. This reduces the risk of the second data model "hallucinating" detail within the holes that was not present in the original image during the filling process. The filling process comprises applying an in-painting algorithm. It is noted that a variety of different in-painting algorithms are known to the person skilled in the art, and could be used by the second data model. The present disclosure is agnostic of any specific in-painting algorithm as the training (see Figure 7) allows the system to adapt to different systems in a training stage.

The final reconstructed image can then be provided to a further component of the client device for additional processing, or rendering, or outputting on a display screen, etc.

Figure 7 is a box diagram illustrating a training loop 500 that may be implemented by a computing system according to an embodiment of the present disclosure to train a first data model 512 and a second data model 516. This training loop 500 is not executed during run time. The first data model 512 is a decimation network trained to insert the plurality of holes and anchor points into an input image, as described in connection with Figures 1 to 5. The second data model 516 is a reconstruction (or in-painting) network trained to reverse the decimation of the first data model 512, thereby reconstructing the missing portions of the image (see the method in Figure 6).

Thus, in the present disclosure, the first data model 512 and the second data model 516 can be trained together using the same training data, so that the system can learn how to optimise the removal of data from the image while maintaining a required quality and fidelity in the in-painted image. Thus, the first and second data models 512, 516 learn what kind of data can be accurately reconstructed with a given in-painting algorithm.

In the training loop 500, an input training image 510 is received, which may be any kind of image (such as a frame from a video game) in RGB, black and white, grayscale, etc. The training images 510 may comprise a variety of different video game frames, encompassing a variety of different levels of detail, different resolutions, different colour schemes, different genres, etc.

This training image 510 is provided to the first data model 512 (in some embodiments together with an importance map as shown in Figures 3 to 5). The first data model 512 applies the decimation process described in connection with Figures 1 to 5 and outputs a modified (or decimated) image 514 comprising the plurality of holes and anchor elements. The modified image 514 contains less data than the input training image 510 and so is more compact. The modified image 514 is transmitted to the second data model 516. The second data model 514 proceeds to reconstruct the original training image 510 using an in-painting algorithm. The second data model 514 may optionally apply other processing techniques during reconstruction of the image, such as super-resolution. The output image from the second data model is the reconstructed image 518.

In the training loop 500, the decimated image 514 and the reconstructed image 518 are provided to a loss module 520. The loss module 520 applies a loss function to train the data models 512, 516 such that the data models 512, 516 learn the effects of different decisions on the final output image 518. The loss functions define what an acceptable output is. The loss module 520 is not implemented during run time.

An additional input to the first data model 512 can be a measure of the desired compression rate and the system can then learn how to compress an input image to different levels, as described above.

The loss function applied by the loss module 520 has two parts, one part to ensure the visual quality of the reconstructed image 518 and one to ensure the decimated image 514 is more compact than the original image 510. The loss module 520 can process the decimated image 514 and the reconstructed image 518 and determine a quality of the reconstructed image 518, reflecting how accurate the reconstruction is. This information can be provided to the data models 512, 516 so that the data models learn how to achieve different quality levels from the decimation and reconstruction process. The same training image 510 can therefore be processed by the training loop a plurality of times, for example to learn how to accurately and reliably achieve different quality levels in the output reconstructed image 518.

For example, on a first pass for a given input image 510 through the training loop the first data model 512 makes certain decisions, such as which of the anchor grid points 202 to retain, and what threshold to apply to an importance map 204,304 associated with the image 510. The loss module 520 reports the results of the first reconstructed image 518 to the first data model 512. Based on this feedback, the same input image 510 may have a second pass through the training loop. The first data model 512 can alter the decisions made, such as which of the anchor grid points 202 to retain and/or what threshold to apply to the importance map 204, 304. The first data model 512 can learn how to balance the size and number of holes in the decimated image 514, with the number of anchor elements, based on what can be accurately reconstructed at the second data model 516 without hallucination.

The loss module 520 reports the results of the second reconstructed image 518 to the first data model 512. Based on this feedback the first data model can learn the impact that the altered decisions have on the reconstructed image. This process allows the first data model 512 to learn how to determine which anchor grid points 202 should be retained, and what threshold to apply to the importance map, to achieve the desired quality and/or compression level in the reconstructed image.

In some embodiments, during this training process the first data model 512 may learn a given ratio between the number of anchor elements that should be inserted per unit area of a hole in the decimated image. Thus, during run time, the first data model 512 may, in some embodiments, only insert an anchor element into a hole if the hole exceeds a given threshold area. The relationship between the number of anchor elements required and the holes in the image is learnt during the training process, by iteratively adjusting the decimation algorithm or process, as described above, and analysing the results of these changes.

Thus, in the present disclosure, the training process 500 teaches the data models 512, 516 how to work together to create the optimal encoding of the image stream. Additional learned methods could be included to create the 'decimation mask'.

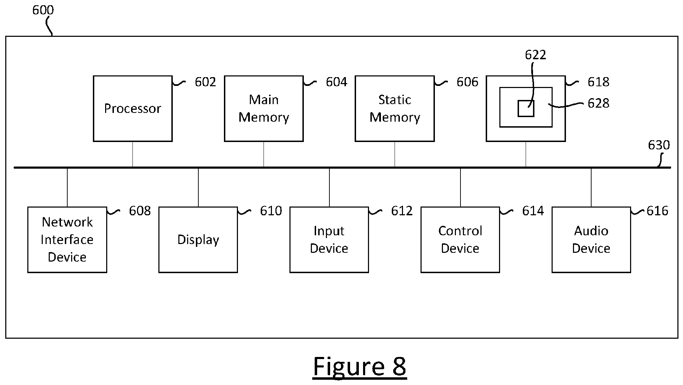

Figure 8 is a block diagram of one example implementation of a computing device 600 according to an embodiment of the present disclosure. The computing device 600 is associated with executable instructions for causing the computing device to perform any one or more of the methodologies discussed herein. The computing device 600 may operate in the capacity of the first data model, or the second data model, or one or more computing resources for implementing the first or second data model for carrying out the methods of the present disclosure.

In some implementations, the computing device 600 may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term "computing device" shall also be taken to include any collection of machines (e.g., computers) that individually or jointly execute a set (or multiple sets) of instructions to perform any one or more of the methodologies discussed herein.

The example computing device 600 includes a processing device 602, a main memory 604 (e.g., read-only memory (ROM), flash memory, dynamic random-access memory (DRAM) such as synchronous DRAM (SDRAM) or Rambus DRAM (RDRAM), etc.), a static memory 606 (e.g., flash memory, static random-access memory (SRAM), etc.), and a secondary memory (e.g., a data storage device 618), which communicate with each other via a bus 630.

Processing device 602 represents one or more general-purpose processors such as a microprocessor, central processing unit, or the like. More particularly, the processing device 602 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processing device 602 may also be one or more special-purpose processing devices such as an application specific integrated circuit (ASIC), a field programmable gate array (FPGA), a digital signal processor (DSP), network processor, or the like. Processing device 602 is configured to execute the processing logic (instructions 622) for performing the operations and steps discussed herein.

The computing device 600 may further include a network interface device 608. The computing device 600 also may include a video display unit 610 (e.g., a liquid crystal display (LCD) or a cathode ray tube (CRT)), an alphanumeric input device 612 (e.g., a keyboard or touchscreen), a cursor control device 614 (e.g., a mouse or touchscreen), and an audio device 616 (e.g., a speaker).

The data storage device 618 may include one or more machine-readable storage media (or more specifically one or more non-transitory computer-readable storage media) 628 on which is stored one or more sets of instructions 622 embodying any one or more of the methodologies or functions described herein. The instructions 622 may also reside, completely or at least partially, within the main memory 604 and/or within the processing device 602 during execution thereof by the computer system 600, the main memory 604 and the processing device 602 also constituting computer-readable storage media.

The various methods described above may be implemented by a computer program. The computer program may include computer code arranged to instruct a computer to perform the functions of one or more of the various methods described above. The computer program and/or the code for performing such methods may be provided to an apparatus, such as a computer, on one or more computer readable media or, more generally, a computer program product. The computer readable media may be transitory or non-transitory. The one or more computer readable media could be, for example, an electronic, magnetic, optical, electromagnetic, infrared, or semiconductor system, or a propagation medium for data transmission, for example for downloading the code over the Internet. Alternatively, the one or more computer readable media could take the form of one or more physical computer readable media such as semiconductor or solid-state memory, magnetic tape, a removable computer diskette, a random-access memory (RAM), a read-only memory (ROM), a rigid magnetic disc, and an optical disk, such as a CD-ROM, CD-R/W or DVD.

In an implementation, the modules, components and other features described herein can be implemented as discrete components or integrated in the functionality of hardware components such as ASICS, FPGAs, DSPs or similar devices.

A "hardware component" is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase "hardware component" should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

Unless specifically stated otherwise, as apparent from the following discussion, it is appreciated that throughout the description, discussions utilising terms such as "providing", "calculating", "computing," "identifying", "detecting ", "establishing" , "training", "determining", "storing", "generating" ,"checking", "obtaining" or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Accordingly, there has been described computer-implemented methods and systems for decimation and subsequent reconstruction of an input image.

Although particular embodiments of this disclosure have been described, it will be appreciated that many modifications/additions and/or substitutions may be made within the scope of the claims.

### EMBODIMENTS

Although the present invention is defined in the claims, it should be understood that the present invention can also (alternatively) be defined in accordance with the following embodiments:
1. A computer-implemented method for reducing data content in an image, the method comprising:
   receiving an image at a first data model;
   removing a plurality of image portions from the image, using a machine learning inference process implemented by the first data model, to thereby insert a plurality of holes in the image; and
   inserting, using the machine learning inference process implemented by the first data model, at least one anchor element into one or more of the plurality of holes, wherein each anchor element is representative of detail within the respective image portion.
2. The computer-implemented method of embodiment 1, wherein each anchor element comprises one or more pixels.
3. The computer-implemented method of embodiment 1 or embodiment 2, wherein each of the plurality of holes has a respective area, and wherein inserting at least one anchor element into one or more of the plurality of holes comprises inserting at least one anchor element into each hole having an area that exceeds a predetermined threshold.
4. The computer-implemented method of any preceding embodiment, wherein removing the plurality of image portions from the image comprises:
   determining, using the machine learning inference process, at least one of a number of holes to be inserted and the location and area of each hole to be inserted.
5. The computer-implemented method of any preceding embodiment, wherein inserting the at least one anchor element into one or more of the plurality holes comprises:
   determining, using the machine learning inference process, at least one of a number of anchor elements to be inserted and the location of each anchor element.
6. The computer-implemented method of any preceding embodiment, wherein inserting the at least one anchor element into one or more of the plurality holes comprises comprises:
   receiving, at the first data model, a grid of anchor points associated with the image;
   determining, using the machine learning inference process, whether each anchor point is required or not; and
   for each required anchor point, inserting a corresponding anchor element into the image, wherein the anchor element comprises one or more pixels located at the anchor point in the image.
7. The computer-implemented method of any of embodiments 4 to 6, further comprising:
   receiving, at the first data model, an indication of required image quality and/or a desired compression level;
   wherein the, or each, determination by the first data model is at least partially based on the indication of required image quality and/or a desired compression level.
8. The computer-implemented method of any preceding embodiment, wherein removing a plurality of image portions from the image comprises generating, using the machine learning inference process, a mask and applying the mask to the image.
9. The computer-implemented method of embodiment 8, further comprising:
   receiving, at the first data model, an importance map associated with the image;
   wherein the importance map is used as an input in the machine learning inference process, such that the mask is generated at least partially based on the importance map.
10. The computer-implemented method of embodiment 9, wherein:
   the importance map allocates an importance value to each pixel in the image; and
   wherein, to generate the mask, the machine learning inference process applies a threshold to the importance map, such that each importance value in the importance map below the threshold is set to zero, and each importance value above the threshold is set to one.
11. The computer-implemented method of embodiment 10, wherein the threshold is selected based on an indication of required image quality received at the first data model.
12. The computer-implemented method of any preceding embodiment, wherein the first data model comprises an artificial neural network, ANN, optionally wherein the ANN is a convolutional neural network, CNN.
13. A computer-implemented method for reconstructing an image, the method comprising:
   receiving, at a second data model, a modified image comprising a plurality of holes, wherein one or more of the holes comprise at least one anchor element;
   applying at least one filling process to fill the plurality of holes, wherein the at least one filling process comprises using a machine learning inference process implemented by the second data model which utilises each anchor element to infer detail within the holes.
14. The computer-implemented method of embodiment 13, wherein utilising each anchor element to infer detail within the holes reduces hallucination of detail within the holes.
15. The computer-implemented method of embodiment 13 or embodiment 14, wherein the second data model comprises an artificial neural network, ANN, optionally wherein the ANN is a convolutional neural network, CNN.
16. A computing device comprising one or more processors that are associated with a memory, the one or more processors configured with executable instructions which, when executed, cause the computing device to carry out the computer-implemented method of any preceding embodiment.
17. The computing device of embodiment 16, wherein the computing device is an extended reality device.
18. A computing system comprising:
   a first computing device comprising the first data model and one or more processors that are associated with a memory, the one or more processors configured with executable instructions which, when executed, cause the first computing device to carry out the computer-implemented method of any of embodiments 1 to 12; and
   a second computing device comprising the second data model and one or more processors that are associated with a memory, the one or more processors configured with executable instructions which, when executed, cause the first computing device to carry out the computer-implemented method of any of embodiments 13 to 15.
19. The computing system of embodiment 18, wherein the first data model and the second data model are trained together using shared training data.

## Claims

1. A computer-implemented method (100) for reducing data content in an image, the method comprising:
receiving (102) an image at a first data model;
removing a plurality of image portions from the image, using a machine learning inference process implemented by the first data model, to insert (104) a plurality of holes in the image; and
inserting (106), using the machine learning inference process implemented by the first data model, at least one anchor element into one or more of the plurality of holes, wherein each anchor element is representative of detail within the respective image portion.

2. The computer-implemented method of claim 1, wherein each anchor element comprises one or more pixels; and/or
wherein each of the plurality of holes has a respective area, and wherein inserting at least one anchor element into one or more of the plurality of holes comprises inserting at least one anchor element into each hole having an area that exceeds a predetermined threshold.

3. The computer-implemented method of any one of the preceding claims, wherein removing the plurality of image portions from the image comprises:
determining (104a), using the machine learning inference process, at least one of a number of holes to be inserted and a location and area of each hole to be inserted.

4. The computer-implemented method of any one of the preceding claims, wherein inserting the at least one anchor element into the one or more of the plurality of holes comprises:
i) determining (106a), using the machine learning inference process, at least one of a number of anchor elements to be inserted and a location of each anchor element; and/or
ii) receiving, at the first data model, a grid of anchor points (202) associated with the image (200);
determining, using the machine learning inference process, whether each anchor point is required or not; and
for each required anchor point, inserting a corresponding anchor element into the image, wherein the anchor element comprises one or more pixels located at the anchor point in the image.

5. The computer-implemented method of claim 3 or claim 4, further comprising:
receiving (103), at the first data model, an indication of a required image quality and/or a desired compression level, wherein the, or each, determination by the first data model is at least partially based on the indication of the required image quality and/or the desired compression level.

6. The computer-implemented method of any one of the preceding claims, wherein removing the plurality of image portions from the image comprises generating, using the machine learning inference process, a mask and applying the mask to the image, optionally wherein the method further comprises receiving, at the first data model, an importance map (204) associated with the image (200), wherein the importance map is used as an input in the machine learning inference process, such that the mask is generated at least partially based on the importance map.

7. The computer-implemented method of claim 6, wherein:
the importance map allocates an importance value to each pixel in the image; and
to generate the mask, the machine learning inference process applies a threshold to the importance map, such that each importance value in the importance map below the threshold is set to zero, and each importance value above the threshold is set to one, optionally wherein the threshold is selected based on an indication of required image quality received at the first data model.

8. The computer-implemented method of any one of the preceding claims, wherein the first data model comprises an artificial neural network, ANN, optionally wherein the ANN is a convolutional neural network, CNN.

9. A computer-implemented method (400) for reconstructing an image, the method comprising:
receiving (402), at a second data model, a modified image comprising a plurality of holes, wherein one or more of the holes comprise at least one anchor element; and
applying at least one filling process (406) to fill the plurality of holes, wherein the at least one filling process comprises using a machine learning inference process implemented by the second data model which utilises each anchor element to infer detail within the holes.

10. The computer-implemented method of claim 9, wherein:
utilising each anchor element to infer detail within the holes reduces hallucination of detail within the holes; and/or
the second data model comprises an artificial neural network, ANN, optionally wherein the ANN is a convolutional neural network, CNN.

11. A computing device (600) comprising one or more processors (602) that are associated with a memory (604), the one or more processors configured with executable instructions which, when executed, cause the computing device to carry out the computer-implemented method of any one of the preceding claims.

12. The computing device of claim 11, wherein the computing device is an extended reality device.

13. A non-transitory computer-readable medium having computer-executable instructions stored thereon, the computer-executable instructions when executed by one or more processors cause the one or more processors to perform the method of any one of claims 1 to 10.

14. A computing system comprising:
a first computing device comprising the first data model and one or more processors that are associated with a memory, the one or more processors configured with executable instructions which, when executed, cause the first computing device to carry out the computer-implemented method of any of claims 1 to 8; and
a second computing device comprising the second data model and one or more processors that are associated with a memory, the one or more processors configured with executable instructions which, when executed, cause the first computing device to carry out the computer-implemented method of any of claims 9 to 10.

15. The computing system of claim 14, wherein the first data model and the second data model are trained together using shared training data.
